# EUROPÄISCHE PATENTSCHRIFT

(11) **EP 0 434 971 B1**
(45) Veröffentlichungstag und Bekanntmachung des Hinweises auf die Patenterteilung: **06.03.1996**
(21) Anmeldenummer: 90122131.7
(22) Anmeldetag: 20.11.1990
(51) Int. Cl.: G01M 15/00

(54) **Vorrichtung zur Diagnose von Brennkraftmaschinen**
Arrangement for controlling internal combustion engines
Dispositif pour contrôler des moteurs à combustion interne

(30) Priorität: 21.12.1989 DE 3942298
(43) Veröffentlichungstag der Anmeldung: 03.07.1991
(73) Patentinhaber: ROBERT BOSCH GMBH, D-70442 Stuttgart (DE)
(72) Erfinder: Anlauf, Jürgen, Dipl.-Ing., W-7320 Göppingen (DE); Schlienz, Ulrich, Dipl.-Ing., W-7333 Ebersbach-Rosswälden (DE); Sieg, Raymond, Dipl.-Ing., W-7000 Stuttgart 50 (DE); Schwarz, Alexander, Dipl.-Phys., W-7505 Ettlingen (DE); Haaga, Gerhard, Dipl.-Ing., W-7319 Dettingen/Teck (DE); Dinkelacker, Walter, Dipl.-Phys., W-7000 Stuttgart 61 (DE)

(56) Entgegenhaltungen:
- WO-A-89/01623
- US-A- 3 908 167
- US-A- 3 978 719
- US-A- 4 452 079
- INSTRUMENTATION TECHNOLOGY Bd. 23, Nr. 7, Juli 1976, PITTSBURGH, PA, US, Seiten 43-48; S.C. HADDEN, E.A.: 'REMOTE DIAGNOSIS OF INTERNAL COMBUSTION ENGINES".
- PATENT ABSTRACTS OF JAPAN vol. 9, no. 174 (P-374)(1897) 19. Juli 1985 & JP-A-60 047 936.
- Firmenschrift der Firma Robert Bosch GmbH, "Kraftfahrtechnisches Taschenbuch", VDI-Verlag Düsseldorf, 19. Auflage, 1984, Seiten 447 - 449.

## Beschreibung

Die Erfindung geht aus von einer Vorrichtung zur Diagnose von Brennkraftmaschinen mit Mitteln, die auf wenigstens eine im Abgasstrom der Brennkraftmaschine enthaltene Größe ansprechen.

Die physikalischen Eigenschaften und die chemische Zusammensetzung der Abgase erlauben Rückschlüsse auf einige Betriebskenngrößen der Brennkraftmaschine, wie beispielsweise der Drehzahl, der Kraftstoffzusammensetzung oder des Luft-Kraftstoff-Verhältnisses.

Aus der US-A 3 908 167 ist eine Vorrichtung zur Ermittlung der Drehzahl der Brennkraftmaschine aus einer im Abgas enthaltenen Größe bekannt. Die Drehzahl wird aufgrund der Auswertung eines Lichtsignals erfaßt, das durch die Abgase verändert wird. Das Abgas wird hierzu zwischen einer Lichtquelle und einem Lichtempfänger hindurchgeleitet.

Eine weitere Vorrichtung zur Ermittlung der Drehzahl einer Brennkraftmaschine ist aus der US-A 3 978 719 bekannt. Die Drehzahl wird aufgrund von Druckschwankungen ermittelt, die im Abgasstrom der Brennkraftmaschine meßbar sind. Die Druckschwankungen werden von einem Drucksensor erfaßt, der über ein Rohr mit dem Ende des Abgassystems der Brennkraftmaschine verbindbar ist.

Durch die internationale Anmeldung WO-A-89 01623 ist bereits ein System vorgeschlagen worden, welches das Signal einer Lambda-Sonde mit Spannungssprung im betrachteten Meßbereich linearisiert und dadurch eine Anzeige des Sauerstoffgehaltes im Abgas und von Lambda-Werten ermöglicht, die ein direktes Maß sind für das der Brennkraftmaschine zugeführte Luft-Kraftstoff-Gemisch. Das vorbekannte System sieht eine Umschaltmöglichkeit zwischen dem Betrieb als Lambda-Sonde und einem Betrieb als Temperaturfühler vor. Während des Betriebsabschnitts zum Ermitteln der Sondentemperatur wird für eine vorgegebene Zeit der Innenwiderstand der Sonde gemessen und anhand von Kennlinien in eine Temperatur umgerechnet. Aus der WO-A- 89 01623 ist ein erstes Mittel zum Erfassen von zwei Kenngrößen des Abgases bekannt, wobei vorauszusetzen ist, daß die Sondentemperatur wenigstens näherungsweise mit der Abgastemperatur übereinstimmt.

Aus der JP-A 52-123292 ist ebenfalls eine Lambda-Sonde bekannt, die neben einem Spannungssignal als Maß für den Sauerstoffpartialdruck noch ein Signal abgibt zum Ermitteln der Temperatur der Sonde. Zur Erfassung der Sondentemperatur ist ein in der Lambda-Sonde integriertes Thermoelement vorgesehen. Die Abgastemperatur der Brennkraftmaschine kann mit diesem in der Lambda-Sonde enthaltenen Thermoelement ebenfalls nur näherungsweise im stationären Betriebszustand erhalten werden.

Aus der Firmenschrift der Firma Robert Bosch GmbH, "Kraftfahrtechnisches Taschenbuch", VDI-Verlag Düsseldorf, 19. Auflage, 1984, Seiten 447 - 449 ist eine Prüfanlage zur Durchführung des sogenannten Europa-Tests beschrieben. Der Europa-Test sieht das Betreiben eines Kraftfahrzeugs in unterschiedlichen Betriebszuständen und die Erfassung der Abgase vor. Das auf einem Rollenprüfstand zu betreibende Kraftfahrzeug ist über eine Schlauchverbindung mit einer umfangreichen Prüfanlage verbunden, die eine physikalische Behandlung des Abgases sowie eine Sammlung des Abgases in einem Sammelbeutel vorsieht. Nach der Beendigung des vorgeschriebenen Fahrzyklus werden die einzelnen Komponenten des Abgases in Gewichtseinheiten ermittelt.

Der Erfindung liegt die Aufgabe zugrunde, eine Vorrichtung zur Diagnose von Brennkraftmaschinen anzugeben, die mit einem einfach handzuhabenden Sensor Kenngrößen des Abgasstromes einer Brennkraftmaschine zu Erfassen gestattet.

Die Aufgabe wird durch die im unabhängigen Anspruch angegebenen Merkmale gelöst.

### Vorteile der Erfindung

Die erfindungsgemäße Vorrichtung erlaubt eine gemeinsame Erfassung von Betriebskenngrößen einer Brennkraftmaschine für Diagnosezwecke, die dadurch im Werkstattbereich überprüft und gegebenenfalls eingestellt werden kann.

Die abhängigen Ansprüche stellen vorteilhafte Ausgestaltungen der erfindungsgemäßen Vorrichtung dar.

### Zeichnung

Ein Ausführungsbeispiel der Erfindung ist in der Zeichnung dargestellt und wird im folgenden näher beschrieben.

Es zeigen:
- Figur 1:: die erfindungsgemäße Vorrichtung,
- Figur 2:: ein bevorzugtes Ausführungsbeispiel des verwendeten Sensors,
- Figur 3:: den Verlauf des Drucks im Abgas über der Anzahl der Kurbelwellenumdrehungen.

### Beschreibung

Bevor auf die Erfindung anhand der Zeichnung näher eingegangen wird, sei daraufhingewiesen, daß die in dem Ausführungsbeispiel dargestellten Mittel und Verarbeitungsstufen nur beispielhaft dargestellt sind. So ist es beispielsweise vorteilhaft, wenn sie zumindest teilweise als Teil einer Meß- und Einstellvorrichtung in dieser integriert sind. Weiterhin ist es denkbar, daß sie Teil eines Mikrocomputers bzw. dessen Programmierung sind. In der folgenden Beschreibung des Ausführungsbeispiels wird der Übersichtlichkeit wegen von einer Vorrichtung mit einem Sensor ausgegangen, mit Hilfe dessen Ausgangssignal nur auf zwei Betriebskenngrößen geschlossen wird. Dabei entspricht die erste Betriebskenngröße der Drehzahl der Brennkraftmaschine und die zweite bevorzugt dem Gehalt einer Gaskomponente im Abgas, wie Sauerstoff, Kohlenoxid oder sonstigen dem Fachmann bekannten Gaskomponenten.

Weitere Betriebskenngrößen, auf die ebenfalls durch einen für die erfindungemäße Vorrichtung geeigneten Abgassensor geschlossen werden können, sind beispielsweise die Abgastemperatur, die Kraftstoffzusammenzusetzung, usw. Die Auswertung dieser Betriebskenngrößen kann beispielsweise erfolgen durch die Bestimmung des Innenwiderstands eines Festelektrolyten, der auch zur Messung des Gehalts einer Abgaskomponente dient oder durch geeignete Mittel, die in dem Abgassensor enthalten sind.

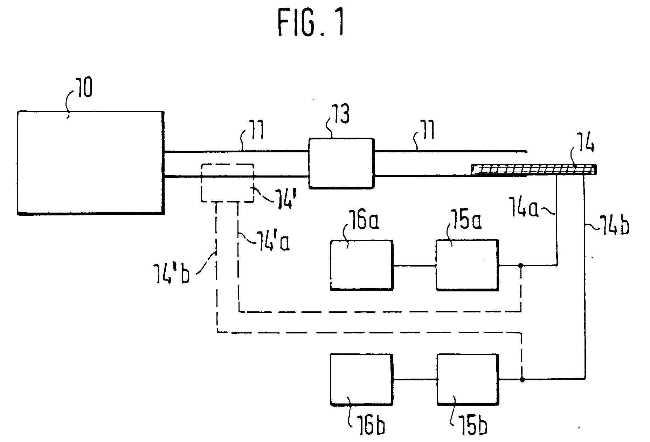

Figur 1 zeigt den prinzipiellen Aufbau der erfindungsgemäßen Vorrichtung im Zusammenhang mit einer zu überprüfenden Brennkraftmaschine 10.

Dabei sind nur Mittel dargestellt, die für die Erläuterung der Erfindung wesentlich sind. Es versteht sich von selbst, daß noch weitere Mittel für den Betrieb der Brennkraftmaschine erforderlich sind, um diese in Übereinstimmung mit immer strenger werdenden Umweltschutzvorschriften befriedigend zu betreiben.

Die von der Brennkraftmaschine 10 abgegebenen Abgase gelangen in das Abgassystem 11, in dem ein Katalysator 13 angeordnet sein kann, der die wesentlichen schädlichen Abgaskomponenten, wie beispielsweise Kohlenmonoxid, Kohlenwasserstoff und Stickoxide, durch chemische oder thermische Prozesse in unschädlichere Abgaskomponenten umwandelt.

Am Ende des Abgassystems 11 wird ein Abgassensor 14 eingeführt, der Größen der von der Brennkraftmaschine abgegebenen Abgase erfaßt und Signale, deren Werte diesen Größen entsprechen, über seine Ausgänge 14a und 14b und über Verstärker 15a bzw. 15b Anzeigevorrichtungen 16a bzw. 16b zuführt.

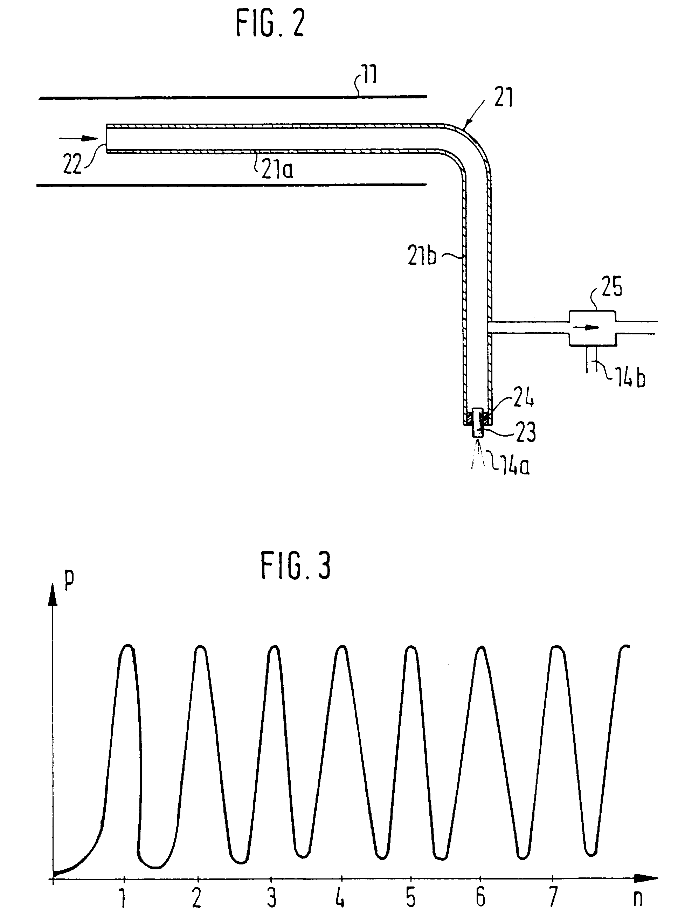

Ein für die erfindungsgemäße Vorrichtung geeigneter Abgassensor 14 ist in Figur 2 dargestellt.

Es sei an dieser Stelle nochmals darauf hingewiesen, daß der verwendete Abgassensor auch derart gestaltet sein kann, daß er stationär im Abgassystem untergebracht ist.

Diese Variante ist in Figur 1 gestrichelt eingezeichnet und durch die Bezugszahl 14' gekennzeichnet.

Die dann vorliegenden Ausgangssignale des Abgassensors können, einzeln oder gemeinsam, für die Regelung von Betriebskenngrößen der Brennkraftmaschine und/oder zu Diagnosezwecken dienen.

Im weiteren soll jedoch hauptsächlich von der bevorzugten Variante ausgegangen werden, daß der verwendete Abgassensor von hinten in das Abgassystem der Brennkraftmaschine eingeführt wird.

Dann besteht der geeignete Abgassensor nach Figur 2 aus einem Rohr 21, das einen Gaseintritt 22 aufweist und an dessen anderem Ende erste Mittel 23 und zweite Mittel 25 angeordnet sind zum Erfassen von ersten bzw. zweiten Größen der Abgase.

In einer ersten Variante des bevorzugten Ausführungsbeispiels stellt das erste Mittel 23 einen Drucksensor (oder ein Mikrofon) mit dem Ausgang 14a dar, durch dessen Ausgangssignal auf die Drehzahl der Brennkraftmaschine geschlossen werden kann. Dieser Drucksensor ist bevorzugt mittels einer Gummilagerung 24 an dem Rohr 21 befestigt.

Das zweite Mittel 25 stellt einen Sensor für die Abgaszusammensetzung mit dem Ausgang 14b dar. Mit ihm kann der Gehalt einer Abgaskomponente, beispielsweise Kohlenmonoxid oder Sauerstoff, bestimmt werden.

Wie bereits einleitend dargestellt, stößt jeder Zylinder der Brennkraftmaschine Abgase bei einem bestimmten Arbeitstakt aus, der beispielsweise bei einem Viertakt-Otto-Motor einmal während zweier Kurbelwellenumdrehungen auftritt. Dieses Ausstoßen der Abgase führt zu Druckschwankungen im Abgassystem, die durch einen Drucksensor erfaßt werden können.

Figur 3 zeigt beispielhaft einen prinzipiellen Verlauf des Druckes p im Abgas über der Anzahl n der Kurbelwellen-Umdrehungen einer Vierzylinder-Brennkraftmaschine.

Da üblicherweise die vier Zylinder zu Zylindergruppen (Zylinder 1, 3 und 2, 4) zusammengefaßt sind, die gegenphasig arbeiten, und jeder Zylinder einmal während zweier Kurbelwellenumdrehungen seine Abgase ausstößt, ergibt sich, daß diese beiden Gruppen einmal pro Kurbelwellenumdrehung Abgase ausstoßen und damit treten jeweils versetzt Druckschwankungen (Drucküberhöhungen) einmal pro Kurbelwellen-Umdrehung auf.

Diese Druckschwankungen setzen sich durch das Rohr 21 fort und gelangen zu dem Drucksensor 23. Dieser setzt die Druckschwankungen in elektrische Signale um, die am Ausgang 14a abgegeben werden und die der Verstärker 15a verstärkt und anschließend einer Anzeigevorrichtung 16a zuführt. Diese wandelt die elektrischen Signale mittels eines geeigneten Verfahrens in einen Drehzahlwert um und zeigt sie an.

Es ist auch möglich, das ermittelte Drehzahlsignal zur Regelung von Betriebskenngrößen der Brennkraftmaschine zu verwenden. Dieses erfolgt bevorzugt dann, wenn der Abgassensor 14' stationär im Abgassystem 11 untergebracht ist.

Die Umsetzung des Drucksensor-Ausgangssignals in einen Drehzahlwert kann beispielsweise nach einem in den eingangs genannten Schriften vorgestellten Verfahren oder durch weitere geeignete Verfahren erfolgen, die dem Fachmann bekannt sind.

Wird der in Figur 2 dargestellte Sensor mit dem Drucksensor 23 und dem Sensor für die Abgaszusammensetzung 25 in das Ende des Abgassystems 11 eingeführt, so gelangen die Abgase der Brennkraftmaschine durch das Rohr 21 auch zu dem Sensor für die Abgaszusammensetzung 25, welcher in der Lage ist, ein Signal am Ausgang 14b abzugeben, das ein Maß für die Konzentration einer Abgaskomponente darstellt.

Dieses elektrische Signal wird entsprechend der Darstellung nach Figur 1 an den Verstärker 15b weitergeleitet, der es verstärkt und einer Anzeigevorrichtung 16b zuführt, die in geeigneter Weise das verstärkte Signal in einen Konzentrationswert der zu messenden Gaskonzentration (O₂, CO₂ ...) umwandelt und anzeigt.

Es ist auch möglich, den ermittelten Konzentrationswert zur Regelung von Betriebskenngrößen der Brennkraftmaschine zu verwenden. Dieses erfolgt bevorzugt dann, wenn der Abgassensor 14' stationär im Abgassystem 11 untergebracht ist.

Die Umwandlung des verstärkten Meßsignales in einen Konzentrationswert ist von dem verwendeten Sensor für die Abgaskomponente abhängig.

Bei Verwendung einer Sauerstoffsonde ist beispielsweise zu unterscheiden zwischen solchen, die über einen weiten Bereich ein Ausgangssignal liefern, das proportional zum Sauerstoffgehalt ist, und solchen, die einen Sprung ihres Ausgangssignals in dem zu messenden Bereich aufweisen.

Die Bestimmung des Gehalts der gewünschten Abgaskomponente ist aus den einleitend genannten Schriften bekannt und es soll an dieser Stelle nicht weiter darauf eingegangen werden.

Die zur Aufnahme der gewünschten Meßgrößen geeigneten ersten und zweiten Mittel, sowie die zur Befestigung dieser Mittel geeigneten Materialien sind teilweise recht temperaturempfindlich. Aus diesem Grunde müssen sie vor einer übermäßigen Erwärmung durch die Abgase geschützt werden.

Diese übermäßige Überhitzung kann beispielsweise durch Kühlmaßnahmen vermieden werden, die geeignete Kühlmedien (Gas, Flüssigkeit) im zu kühlenden Bereich verwenden.

Eine weitere Möglichkeit besteht darin, den Durchmesser des Rohres so klein wie möglich zu gestalten. Damit gelangt in dieses nur eine Menge an heißen Abgasen, wie sie für die gewünschten Messungen unbedingt erforderlich ist.

In diesem Fall hat es sich teilweise als notwendig erwiesen, eine Überhitzung durch Abgase zu vermeiden, die an der Außenwand des Rohres 21 vorbeiströmen.

Das kann unter anderem durch eine geeignete geometrische Formung des Abgassensors 14 erreicht werden, indem beispielsweise das Rohr 21 des verwendeten Abgassensors vorteilhafterweise einen Knick aufweist, der es in die Teile 21a und 21b unterteilt.

Es wird dann, wie aus Figur 2 ersichtlich, lediglich der Teil 21a in das Abgassystem 11 der Brennkraftmaschine eingeführt. Dadurch wird erreicht, daß Abgase, die an der Außenseite des Rohres 21 vorbeiströmen den Bereich des Drucksensors 23 und den des Sensor 24 für die Abgaszusammensetzung nicht erreichen. Stattdessen strömen diese Abgase in Richtung des Rohres 21a weiter und dadurch wird vermieden, daß die genannten Sensoren die an dem Teil 21b des Rohres 21 befestigt sind, unnötigt überhitzt werden.

Sollte trotzdem eine Überhitzung empfindlicher Teile durch die genannte Maßnahme nicht vermieden werden können, so besteht weiterhin die Möglichkeit, die Oberfläche des Rohres 21, speziell des Teiles 21b, derart zu gestalten, daß eine optimale Wärmeabgabe erfolgt.

Zusätzlich kann die Wärmeabgabe auch durch geeignete Materialien für den Abgassensor 14, speziell für das Rohr 21 optimiert werden. Entscheidend sind in diesem Fall beispielsweise die Temperaturleitfähigkeit und -kapazität.

Es besteht weiterhin die Möglichkeit, durch eine nicht eingezeichnete Temperaturregeleinrichtung einzelne Bereiche des Abgassensors in bestimmten Temperaturbereichen zu halten.

So sind einige Sensoren für die Abgaszusammensetzung, wie solche aus festelektrolytischem Material, nur funktionsfähig (betriebsbereit), wenn sie innerhalb eines bestimmten Temperaturbereiches betrieben werden. Daher ist es teilweise notwendig, für entsprechende Sensoren eine Heizeinrichtung vorzusehen.

Die Temperaturregeleinrichtung kann aber auch dergestalt sein, daß sie es erlaubt, einzelne Bereiche des Abgassensors durch Kühlung gezielt in einem vorgegebenen Temperaturbereich zu halten. Auch auf diese Weise kann eine Überhitzung vermieden werden.

Der Kern der Erfindung besteht darin, daß es die erfindungsgemäße Vorrichtung mittels eines geeigneten Sensors erlaubt, im Werkstattbereich Betriebskenngrößen einer Brennkraftmaschine, wie die Kurbelwellendrehzahl und den Gehalt von Abgaskomponenten, der Abgastemperatur, usw., zu bestimmen, ohne in den Motorraum der Brennkraftmaschine einzugreifen.

Das erfolgt in der ersten Variante der erfindungsgemäßen Vorrichtung dadurch, daß in dem Abgassensor erste Mittel vorgesehen sind, die den Druck der Abgase der Brennkraftmaschine aufnehmen. Aufgrund des Ausgangssignals der ersten Mittel kann auf die Kurbelwellendrehzahl geschlossen werden.

In dem Abgassensor sind weitere Mittel angeordnet, deren Ausgangssignale ein Maß darstellen für den Gehalt einer Abgaskomponente, der Abgastemperatur, usw. Dadurch ist es möglich, auf das der Brennkraftmaschine zugeführte Luft-Kraftstoff-Gemisch, auf den Verbrennungsablauf in der Brennkraftmaschine sowie auf weitere Betriebsparameter zu schließen.

Für eine weitere Variante der erfindungsgemäßen Vorrichtung wird ein Abgassensor verwendet, dessen erste Mittel als Strömungsmesser, Temperaturfühler oder Hitzdrahtanemometer gestaltet sind.

Durch die bereits genannten und die in Figur 3 dargestellten Druckschwankungen kommt es innerhalb des Abgases auch zu zyklischen Strömungsverläufen, die erfaßbar sind und ebenfalls auf die Drehzahl schließen lassen.

Ähnlich wie der zyklische Druckverlauf, der in Figur 3 dargestellt ist, verursacht das zyklische Ausstoßen der Abgase, die aus Verbrennungsvorgängen stammen und damit sehr heiß sind, einen zyklischen Temperaturverlauf, der ähnlich wie der in Figur 3 dargestellte Druckverlauf ist.

Damit erlaubt eine Auswertung der Temperatur im Abgassystem ebenfalls auf die Drehzahl der Brennkraftmaschine zu schließen.

Die genannten Varianten können weiter derart ausgestaltet sein, daß der verwendete Sensor vorübergehend oder stationär in dem Abgassystem der Brennkraftmaschine untergebracht ist.

Besonders im zweiten Fall können die Ausgangssignale des verwendeten Abgassensors einzeln oder alleine zumindest zeitweise für die Regelung von Betriebskenngrößen der Brennkraftmaschine verwendet werden. Dann sind Anschlußmöglichkeiten vorgesehen, die die Ausgangssignale des Abgassensors schnell und einfach an eine Diagnoseeinheit im Werkstattbereich weiterleiten.

## Patentansprüche

1. Abgassensor (14) zur Diagnose von Brennkraftmaschinen (10), mit einem Rohr (21), dessen eines Ende, das einen Gaseintritt (22) aufweist, in das Abgassystem (11) der Brennkraftmaschine (10) einführbar ist, und an dessen anderem Ende, das sich außerhalb des Abgassystems (11) befindet, erste Mittel (23) angeordnet sind, die an einem ersten Ausgang (14a) wenigstens ein Signal bereitstellen, das ein Maß für die Drehzahl der Brennkraftmaschine (10) ist, dadurch gekennzeichnet, daß an dem anderen Ende des Rohrs (21) von den ersten Mitteln (23) getrennte und unabhängige zweite Mittel (24) vorgesehen sind, die an einem zweiten Ausgang (14b) ein Signal bereitstellen, das ein Maß für den Gehalt wenigstens einer im Abgas enthaltenen Abgaskomponente ist.

2. Vorrichtung nach Anspruch 1, dadurch gekennzeichnet, daß mit Hilfe des ersten Mittels (23) ein Druck, eine Strömung oder ein akustisches Signal im Abgas gemessen werden kann.

3. Vorrichtung nach Anspruch 1, dadurch gekennzeichnet, daß mit Hilfe des ersten Mittels (23) eine Temperatur im Abgasgemisch gemessen werden kann.

4. Vorrichtung nach Anspruch 1 bis 3, dadurch gekennzeichnet daß der Abgassensor (14) derart gestaltet ist, daß auch bei Verwendung von temperaturempfindlichen ersten (23) und/oder zweiten (25) Mitteln beziehungsweise zur Befestigung dieser Mittel geeigneten Materialien diese durch die Abgase der Brennkraftmaschine (10) nicht überhitzt werden.

5. Vorrichtung nach Anspruch 4, dadurch gekennzeichnet, daß das Überhitzen vermieden wird durch eine geometrische Formung des Abgassensors 14, die es erlaubt, außen am Abgassensor 14 vorbeiströmende Abgase von den Bereichen des ersten und zweiten Mittels fernzuhalten.

6. Vorrichtung nach Anspruch 4 oder 5, dadurch gekennzeichnet, daß das Überhitzen vermieden wird durch eine Oberflächengestaltung der für den Abgassensor (14) verwendeten Materialien, die eine optimale Wärmeabgabe erlaubt.

7. Vorrichtung nach eine der Ansprüche 4 bis 6, daduch gekennzeichnet, daß das Überhitzen vermieden wird durch für den Abgassensor (14) verwendete Materialien, die durch ihre Wärmeleitfähigkeit und -kapazität eine optimale Wärmeabgabe erlauben.

## Claims

1. Exhaust gas sensor (14) for the diagnosis of internal combustion engines (10), having a tube (21) of which one end, which has a gas inlet (22), can be inserted into the exhaust gas system (11) of the internal combustion engine (10), and at the other end of which, which is located outside the exhaust gas system (11), there are arranged first means (23) which provide at a first output (14a) at least one signal which is a measure of the rotational speed of the internal combustion engine (10), characterized in that, at the other end of the tube (21) from the first means (23), there are provided separate and independent second means (24) which provide at a second output (14b) a signal which is a measure of the content of at least one exhaust gas component contained in the exhaust gas.

2. Device according to Claim 1, characterized in that, using the first means (23), it is possible to measure a pressure, a flow or an acoustic signal in the exhaust gas.

3. Device according to Claim 1, characterized in that, using the first means (23), it is possible to measure a temperature in the exhaust gas mixture.

4. Device according to Claims 1 to 3, characterized in that the exhaust gas sensor (14) is configured in such a way that, even when using temperature-sensitive first (23) and/or second (25) means, or suitable materials for fastening these means, the latter are not overheated by the exhaust gases from the internal combustion engine (10).

5. Device according to Claim 4, characterized in that the overheating is avoided by means of a geometric shaping of the exhaust gas sensor 14 which permits exhaust gases flowing past the exhaust gas sensor 14 on the outside to be kept away from the regions of the first and second means.

6. Device according to Claim 4 or 5, characterized in that the overheating is avoided by means of a surface configuration of the materials used for the exhaust gas sensor (14) which permits the optimum dissipation of heat.

7. Device according to one of Claims 4 to 6, characterized in that the overheating is avoided by means of materials used for the exhaust gas sensor (14) which, as a result of their thermal conductivity and thermal capacity, allow the optimum dissipation of heat.

## Revendications

1. Détecteur de gaz d'échappement (14) pour le contrôle de moteurs à combustion interne (10), avec un tube (21) dont une extrémité comportant une entrée de gaz (22), peut être introduite dans le système de gaz d'échappement (11) du moteur à combustion interne (10), tandis qu'à son autre extrémité, située à l'extérieur du système de gaz d'échappement (11), sont disposés des premiers moyens (23) qui, à une première sortie (14a), rendent disponible au moins un signal constituant une mesure de la vitesse de rotation du moteur à combustion interne (10), caractérisé en ce qu'à l'autre extrémité du tube (21) sont prévus des seconds moyens (24), distincts et indépendants des premiers moyens (23), qui rendent disponible, à une seconde sortie (14b), un signal constituant une mesure de la teneur d'au moins un composant contenu dans les gaz d'échappement.

2. Dispositif selon la revendication 1, caractérisé en ce qu'à l'aide des premiers moyens (23), on peut mesurer une pression, un écoulement, ou bien un signal acoustique, dans les gaz d'échappement.

3. Dispositif selon la revendication 1, caractérisé en ce qu'à l'aide des premiers moyens (23), on peut mesurer une température dans le mélange de gaz d'échappement.

4. Dispositif selon l'une des revendications 1 à 3, caractérisé en ce que le détecteur de gaz d'échappement (14) est réalisé de façon que, même lors de l'utilisation de premiers moyens (23) et/ou de seconds moyens (25) ou bien de matériaux appropriés pour la fixation de ces moyens, sensibles à la température, ceux-ci ne sont pas surchauffés par les gaz d'échappement du moteur à combustion interne (10).

5. Dispositif selon la revendication 4, caractérisé en ce que la surchauffe est évitée grâce à une conformation géométrique du détecteur du gaz d'échappement 14 qui permet de tenir les premiers et les seconds moyens éloignés des gaz d'échappement s'écoulant à l'extérieur le long du détecteur de gaz d'échappement 14.

6. Dispositif selon la revendication 5 ou 6, caractérisé en ce que la surchauffe est évitée grâce à une conception de la surface des matériaux utilisés pour le détecteur (14) de gaz d'échappement, qui permet une dissipation optimale de la chaleur.

7. Dispositif selon l'une quelconque des revendications 4 à 6, caractérisé en ce que la surchauffe est évitée grâce aux matériaux utilisés pour le détecteur (14) de gaz d'échappement, matériaux qui, par leur conductibilité et leur capacité thermique, permettent une dissipation optimale de la chaleur.
